# EUROPÄISCHE PATENTSCHRIFT

(11) **EP 0 846 822 B1**
(45) Veröffentlichungstag und Bekanntmachung des Hinweises auf die Patenterteilung: **25.02.2004**
(21) Anmeldenummer: 97121245.1
(22) Anmeldetag: 03.12.1997
(51) Int. Cl.: E05B 49/00

(54) **Speicher für benutzerindividuelle Einstelldaten von Fahrzeug-Ausrüstungsteilen**
Individual data storage memory for positioning equipment parts of a vehicle
Mémoire de stockage de données individuelles destinées au positionnement de parties d'équipement de véhicule

(30) Priorität: 03.12.1996 DE 19650048
(43) Veröffentlichungstag der Anmeldung: 10.06.1998
(73) Patentinhaber: Bayerische Motoren Werke Aktiengesellschaft, 80788 München (DE)
(72) Erfinder: Gumpinger, Franz, 81375 München (DE); Kuhls, Burkhard, 81673 München (DE); Rumpf, Oliver, Dr., 85375 Neufahrn (DE)

(56) Entgegenhaltungen:
- EP-A- 0 617 382
- WO-A-90/08242
- DE-U- 9 209 666
- FR-A- 2 719 818
- US-A- 4 686 358

## Beschreibung

Die Erfindung bezieht sich auf einen Speicher für benutzerindividuelle Einstelldaten von Fahrzeug-Ausrüstungsteilen, der demontierbar in einer Fahrzeug-Sicherheitseinrichtung zum Verschließen und/oder Öffnen von Fahrzeugschlössern angeordnet ist

Ein derartiger Speicher ist aus der EP 0 452 346 B1 bekannt. Dabei ist der Speicher selbst als Chipkarte bezeichnet. Handelt es sich dabei um eine konventionelle Chipkarte, die beispielsweise auch als EC-Karte, Telefonkarte oder als Karte zum Speichern von Krankenkassen-Mitgliedskarten verwendet werden, so bedeutet dies in der Regel einen nicht unerheblichen Platzbedarf für die Unterbringung in der Fahrzeug-Sicherheitseinrichtung. Angesichts der Vielzahl von Chipkarten, die heutzutage von jedem Individuum zu handhaben sind, ergibt sich damit auch noch eine Erhöhung der Gesamtbelastung an Karten und Probleme in der Handhabung bzw. Auswahl der "richtigen" Chipkarte.

Der Erfindung liegt die Aufgabe zugrunde, einen Speicher der eingangs genannten Art zu schaffen, der sich durch ein geringes Bauvolumen auszeichnet und dennoch ein Normmaß besitzt.

Die Erfindung löst diese Aufgabe durch die kennzeichnenden Merkmale des Patentanspruchs 1.

Eine SIM-Modul-Karte ist wesentlich kleiner als eine konventionelle Chipkarte. Ihre Handhabung ist einfacher als die einer konventionellen Chipkarte.

Zwar ist es an sich bekannt, eine SIM-Modul-Karte in einer Chipkarte demontierbar einzusetzen (vgl. DE-Gebrauchsmuster 93 044 99). Dabei ist jedoch keinerlei Bezug zu einem Fahrzeug gegeben. Vielmehr dient die SIM-Modul-Karte dazu, einerseits in ein Handtelefon und andererseits in eine normierte Chip-Telefonkarte eingesetzt zu werden.

Vorteilhafte Ausgestaltungen der Erfindung sind in den weiteren Patentansprüchen beschrieben. Die Verwendung einer konventionellen Chipkarte als Aufnahmebehältnis der SMK ist demnach zwar für sich bekannt. Versieht man die Chipkarte mit einem weiteren Speicher für zusätzliche Daten, so ergibt sich dadurch neben der Aufbewahrungsfunktion ein vergrößerter Nutzen der Chipkarte. Diese kann beispielsweise Daten als fahrzeugspezifische Daten enthalten, die beispielsweise in einer Servicewerkstatt ausgelesen werden können und die Fehleranalyse oder das Erstellen eines Reparaturauftrags deutlich erleichtem. Bei diesen Daten kann es sich beispielsweise um die Fahrgestellnummer, die Typenbezeichnung und weitere fest vorgegebene Daten ebenso handeln wie um variable Daten, wie den Inhalt von Fehlerspeichem, die Laufleistung. Diese Daten ändern sich im Laufe des Fahrzeugbetriebs.

Bei der Fahrzeug-Sicherheitseinrichtung kann es sich neben der an sich bekannten Möglichkeit eines Fembedienungs-Schlüssels um einen mechanischen Schlüssel handeln. Dieser Schlüssel kann beispielsweise im Rahmen der elektronischen Wegfahrsperre (EWS) mit zusätzlichen Daten versehen sein, die im Rahmen der EWS zwischen dem Schlüssel und dem Fahrzeug übertragen werden. Auf die Art der Übertragung kommt es dabei nicht an. Es kann sich sowohl um einen einseitigen Übertragungsvorgang zwischen dem Schlüssel und dem Fahrzeug, aber auch um einen bidirektionalen Dialog zwischen Schlüssel und Fahrzeug handeln.

Ebenso können die benutzerindividuellen Einstelldaten zusammen mit den EWS-Daten in einem gemeinsamen Übertragungsvorgang und/oder auf demselben Übertragungsweg übertragen werden. Innerhalb des Schlüssels kann hierzu auch ein Antennenleiter angeordnet sein, der mit der SIM-Modul-Karte an der mechanischen Kontaktstelle elektrisch verbunden ist.

Es ist genauso auch möglich, die Einstelldaten und die EWS-Daten zeitlich unabhängig voneinander zu übertragen und/oder hierfür verschiedene Übertragungswege vorzusehen. So können die EWS-Daten drahtlos und die Einstelldaten mittels -eines Kontakts übertragen werden, der Teil einer drahtgebundenen Verbindung zwischen dem Speicher und einer entsprechenden Auswerteelektronik des Fahrzeugs ist.

Anhand der Zeichnung ist die Erfindung weiter erläutert. Es zeigt
- Fig. 1: den erfindungsgemäßen Speicher in einer konventionellen Chipkarte angeordnet und in der Daraufsicht
- Fig. 2: einen Querschnitt zu Fig. 1
- Fig. 3: den Speicher von Fig. 1 und 2 in einem mechanischen Schlüssel angeordnet,
- Fig. 4: eine alternative Ausgestaltung zu Fig. 3,
- Fig. 5: ein weiteres Ausführungsbeispiel im Querschnitt analog zu Fig. 2 und
- Fig. 6: den Speicher von Fig. 5 im Querschnitt bzw. in der Draufsicht bei Anordnung in einem Schlüssel.

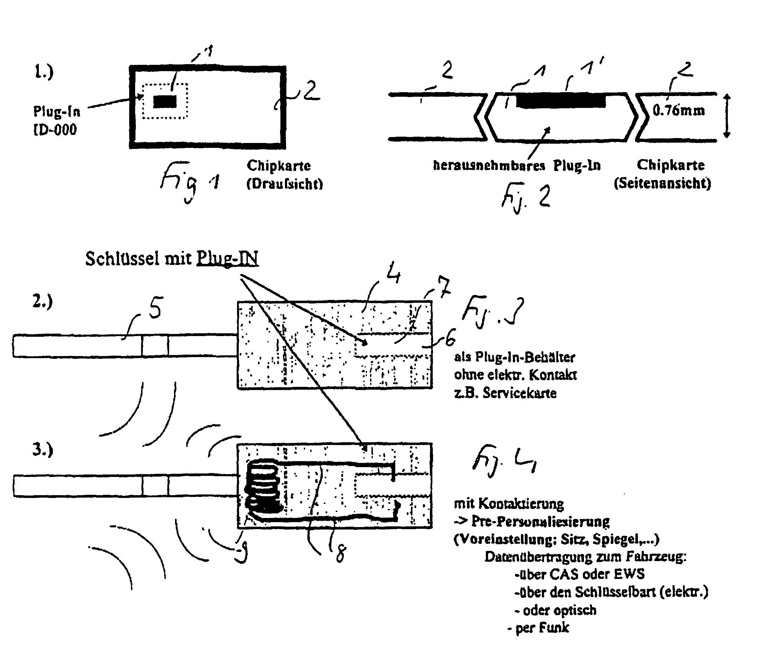

Der in Fig. 1 gezeigte Speicher 1 enthält benutzerindividuelle Daten für Ausrüstungsteile des Fahrzeugs, wie Innen- und Außenspiegel, Fahrersitzkomponenten sowie Heiz-und/oder Klimaanlage. Der Speicher 1 ist als SIM-Modul-Karte ausgebildet und in einer konventionellen Chipkarte 2 angeordnet.

Wie insbesondere in Fig. 2 zu erkennen, ist der Speicher 1 mechanisch verrastet und aus der Chipkarte 2 durch entsprechende Verformung im Übergangsbereich zwischen Speicher 1 und Chipkarte 2 herausnehmbar. Mit der Angabe 0,76 mm ist die Bauhöhe einer Chipkarte angegeben. Der geschwärzte Teil des Speichers 1 stellt den aktiven Speicher 1' dar, während das übrige Volumen des Speichers 1 lediglich dazu dient, die Bauhöhe des Speichers 1 dem der Chipkarte 2 anzupassen.

In Fig. 3 ist ein mechanischer Schlüssel 4 mit Bart 5 gezeigt, der eine konventionelle Bauform besitzt. Im Bereich des Schaftes ist eine Öffnung und ein sich daran anschließendes Volumen 6 dargestellt, in das der Speicher 1 einsetzbar ist.

Ist der Speicher 1 in das Volumen 7 eingesetzt, so können die enthaltenen Daten drahtlos nach Art eines Transponders auf einen Sender-Empfänger des Fahrzeugs übertragen werden und mittels einer entsprechenden Auswerteelektronik in Stellbefehle für die Ausrüstungsteile umgesetzt werden. Es ist ebenso möglich, die im Speicher 1 enthaltenen Daten drahtgebunden auszulösen. Eine Ausführungsform hierzu ist in Fig. 4 dargestellt. Über Anschlußdrähte 8 sowie eine Übertragungsspule 9 können die Daten aus dem Speicher 1 ausgelesen und drahtlos an einen Empfänger (nicht dargestellt) des Fahrzeugs übertragen werden. Es ist ebenso möglich, den Bart 5 in den Übertragungsweg als Bestandteil einer Übertragungsleitung miteinzubeziehen. Hierzu sind die Anschlußdrähte 9 mit dem Bart 5 elektrisch verbunden. Am Bart 5 greift, wie an sich bekannt, ein elektrischer Kontakt an, der sich im Zündschloß befindet und der mit der Auswerteelektronik verbunden ist.

Selbstverständlich sind auch weitere Übertragungsmöglichkeiten und -wege vorstellbar. Die Übertragung kann auch optisch oder per Funk erfolgen. Auch kann diese Übertragung in Verbindung mit der Übertragung von Daten erfolgen, die sich in einem separaten Speicher fest innerhalb des Schafts 4 befinden und die im Rahmen der elektronischen Wegfahrsperre dazu dienen, den Schlüssel 4/5 als berechtigt zu erkennen und Antriebsaggregate des Fahrzeugs freizuschalten.

Auch ist es möglich, eine stufenweise Übertragung der im Speicher 1 enthaltenen Daten vorzunehmen. Insbesondere beim Aufstartverhalten (Aufwecken des Fahrzeugs) liegt eine hohe Datenbelastung vor. Es werden dann zunächst nur die dringensten Daten übertragen, wie beispielsweise für die Einstellung der Sitzkomponenten. Später werden die weniger dringenden, z. B. für die Einstellung der Heizund/oder Klimaanlage übertragen. Während des Betriebs bzw. beim Abstellen des Fahrzeugs werden die gespeicherten und gegebenfalls während des Betriebs veränderten benutzerindividuellen Einstelldaten vom Fahrzeug in den Speicher 1 rückgespeichert und bei der anschließenden Benutzung des Fahrzeugs als Einstelldaten ausgelesen.

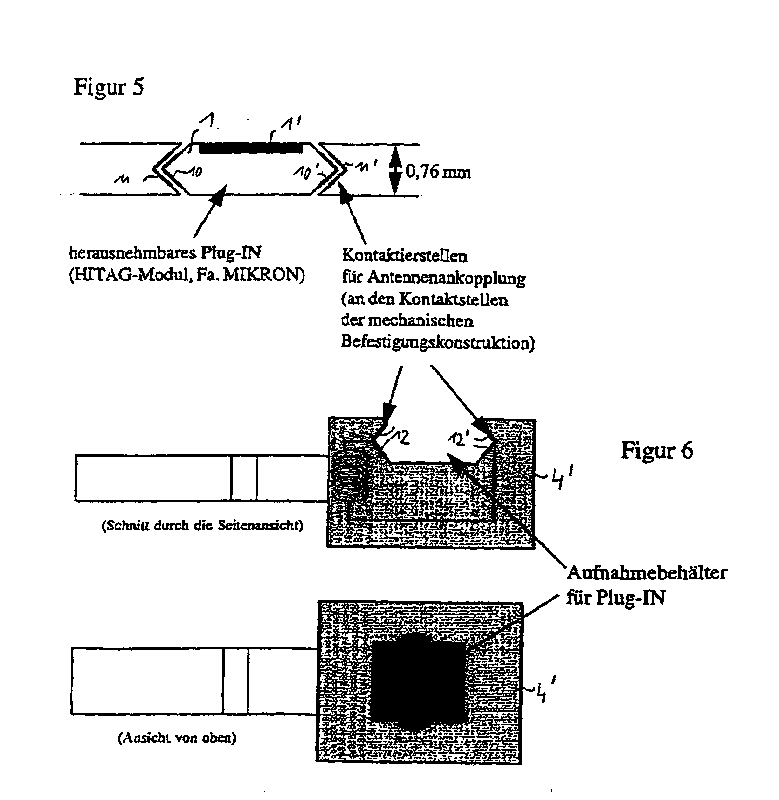

Das Ausführungsbeispiel von Fig. 5 unterscheidet sich gegenüber dem von Fig. 2 durch elektrische Kontakte 10 und 10' bzw 11 und 11', die in dem Bereich der gegensitigen Berührung von SIM-Modul-Karte 1 und Chipkarte 2 angebracht sind. Die Kontakte 11 und 11' sind mit einer Antennenstruktur innerhalb der Chipkarte 2 (nicht dargestellt) verbunden. Damit wird es möglich, die in der Karte 1 enthaltenenen Daten oder eienen Teil davon bei Anordnung der Karte 1 in der Chipkarte 2 auszusenden. Gleichzeitig wird es möglich, diese Daten auszusenden, wenn die Karte 1 im Schlüssel 4' angeordnet ist. Diese Anordnung ist in Fig.6 im Schnitt und in der Ansicht von oben gezeigt. Der schlüssel 4' unterscheidet sich vom Schlüssel 4 von Fig.3/4 durch Kontakte 12 und 12' entsprechend den Kontakten 11 und 11', die an den mechanischen Kontaktstellen zwischen Karte 1 und Schlüssel 4' angeordnnet sind. Ergänzend oder alternativ zur Ausbildung der Kontakte 11 und 11' bzw. 12 und 12' können auch Federkontakte angeordnet sein (nicht dargestellt).

## Patentansprüche

1. Speicher für benutzerindividuelle Einstelldaten von Fahrzeug-Ausrüstungsteilen, der demontierbar in einer Fahrzeug-Sicherheitseinrichtung zum Verschließen und/oder Öffnen von Fahrzeugschlössem angeordnet ist, **dadurch gekennzeichnet, daß** der Speicher als SIM-Modul-Karte (1) ausgebildet ist, die einerseits in die Fahrzeug-Sicherheitseinrichtung und andererseits in ein Aufnahmebehältnis einsetzbar ist.

2. Speicher nach Anspruch 1, **dadurch gekennzeichnet, daß** die SIM-Modul-Karte in eine konventionelle Chipkarte (2) als Aufnahmebehältnis einsetzbar ist.

3. Speicher nach Anspruch 1 oder 2, **dadurch gekennzeichnet, daß** die ChipKarte einen weiteren Speicher für zusätzliche Daten enthält.

4. Speicher nach einem der Ansprüche 1 bis 3, **dadurch gekennzeichnet, daß** die Fahrzeug-Sicherneitseinrichtung ein mechanischer Schlüssel (4,4') ist.

5. Speicher nach Anspruch 4, **dadurch gekennzeichnet, daß** der Schlüssel einen weiteren Speicher für Daten enthält, die im Rahmen der elektronischen Wegfahrsicherung EWS zwischen dem Schlüssel und dem Fahrzeug übertragbar sind.

6. Speicher nach Anspruch 5, **dadurch gekennzeichnet, daß** die Einstelldaten und die EWS-Daten in einem gemeinsamen Übertragungsvorgang übertragbar sind.

7. Speicher nach Anspruch 5 oder 6, **dadurch gekennzeichnet, daß** die Einstelldaten und die EWS-Daten auf demselben Übertragungsweg übertragbar sind.

8. Speicher nach einem der Ansprüche 6 oder 7, **dadurch gekennzeichnet, daß** der Schlüssel und /oder das Aufnahmebehältnis an ihren mechanischen Anlagestellen mit der SIM-Modul-Karte elektrische Kontakte besitzen, die elektrisch mit einer integriereten Antenne verbunden sind.

## Claims

1. A memory for setting up data individual to the user of vehicle equipment parts, which is arranged demountably in a vehicle security device for the locking and/or opening of vehicle locks, **characterised in that** the memory is constructed as a SIM-module card (1), which on the one hand can be inserted into the vehicle security device and on the other in an accepting container.

2. A memory according to claim 1, **characterised in that** the SIM-module card can be inserted into a conventional chip card (2) as a receiving container.

3. A memory according to claim 1 or claim 2, **characterised in that** the chip card has a further memory for additional data.

4. A memory according to one of the claims 1 to 3, **characterised in that** the vehicle security device is a mechanical key (4, 4).

5. A memory according to claim 4, **characterised in that** the key contains a further memory for data, which can be transmitted between the key and the vehicle in the context of the electronic drive away security (EWS).

6. A memory according to claim 5, **characterised in that** the set up data and the EWS data can be transmitted in a common transmission process.

7. A memory according to claim 5 or claim 6, **characterised in that** the set up data and the EWS data can be transmitted on the same transmission path.

8. A memory according to one of the claims 6 or 7, **characterised in that** the key and/or the accepting arrangement possess electrical contacts on their mechanical abutment positions with the SIM-module card, which are joined electronically to an integrated antenna.

## Revendications

1. Mémoire de données individuelles de réglage de parties d'équipement de véhicules, qui est disposée de manière démontable sur un dispositif de sécurité du véhicule servant à fermer et/ou ouvrir des serrures de véhicule,
**caractérisée en ce que**
la mémoire présente la forme d'une carte à module SIM (1), qui peut être insérée d'une part dans le dispositif de sécurité du véhicule et d'autre part dans un réceptacle de logement.

2. Mémoire selon la revendication 1,
**caractérisée en ce que**
la carte à module SIM peut être insérée dans une carte à puce conventionnelle (2) servant de réceptacle de logement.

3. Mémoire selon la revendication 1 ou 2,
**caractérisée en ce que**
la carte à puce contient une autre mémoire pour des données supplémentaires.

4. Mémoire selon l'une quelconque des revendications 1 à 3,
**caractérisée en ce que**
le dispositif de sécurité du véhicule est une clé mécanique (4, 4').

5. Mémoire selon la revendication 4,
**caractérisée en ce que** la
clé contient une autre mémoire pour des données qui peuvent être transmises dans le cadre du verrouillage électronique de l'allumage EWS entre la clé et le véhicule.

6. Mémoire selon la revendication 5,
**caractérisée en ce que**
les données de réglage et les données de l'EWS peuvent être transmises dans un processus de transmission commune.

7. Mémoire selon la revendication 5 ou 6,
**caractérisée en ce que**
les données de réglage et les données de l'EWS peuvent être transmises sur le même chemin de transmission.

8. Mémoire selon l'une quelconque des revendications 6 ou 7,
**caractérisée en ce que**
la clé et/ou le réceptacle de logement, au niveau de leurs points de contact mécaniques avec la carte à module SIM, présentent des contacts électriques, qui sont reliés électriquement à une antenne, intégrée.
